## Europäisches Patentamt

## European Patent Office

## Office européen des brevets

(19)

(11) Veröffentlichungsnummer : **0 200 096**
**B1**

(12) **EUROPÄISCHE PATENTSCHRIFT**

(45) Veröffentlichungstag der Patentschrift :
20.09.89

(51) Int. Cl.⁴ : **B 01 D 35/28**

(21) Anmeldenummer : 86105259.5

(22) Anmeldetag : 16.04.86

(54) Siebvorrichtung.

(30) Priorität : 03.05.85 DE 3515891

(43) Veröffentlichungstag der Anmeldung :
05.11.86 Patentblatt 86/45

(45) Bekanntmachung des Hinweises auf die Patenterteilung : 20.09.89 Patentblatt 89/38

(84) Benannte Vertragsstaaten :
AT BE CH DE FR GB IT LI NL SE

(56) Entgegenhaltungen :
EP—A— 0 042 015
DE—B— 1 108 186
DE—B— 1 301 226
FR—A— 2 355 544
GB—A— 2 070 466
GB—A— 2 124 098
US—A— 2 757 581

(73) Patentinhaber : Hein, Lehmann Aktiengesellschaft
Fichtenstrasse 75
D-4000 Düsseldorf 1 (DE)

Isenmann Siebe GmbH
Gerwigstrasse 67
D-7500 Karlsruhe (DE)

(72) Erfinder : Schmidt, Gerhard
Eichenweg 15
D-7505 Ettlingen (DE)
Erfinder : Neukam, Christian
Friedrich-Naumann-Strasse 52
D-7500 Karlsruhe 21 (DE)
Erfinder : Schmidt, Heinrich, Dipl.-Ing.
Artusstrasse 64
D-4000 Düsseldorf 30 (DE)

(74) Vertreter : Patentanwaltsbüro Cohausz & Florack
Postfach 14 01 20 Schumannstrasse 97
D-4000 Düsseldorf 1 (DE)

## Beschreibung

Die Erfindung betrifft eine Siebvorrichtung zum Trennen von Feststoff-Flüssigkeitsgemischen in Feststoff und Flüssigkeit, mit einem stillstehenden, vibrierenden oder schwingenden Siebkorb, dessen Innenwand eine Rotationsfläche mit senkrechter Achse ist, dessen Durchmesser sich nach unten hin verjüngt und in dessen oberstem Bereich das Gemisch mit hoher Geschwindigkeit tangential eingebracht wird.

Aus der DE-C-1 301 226 ist eine Siebvorrichtung für das Naßklassieren von Schüttgut bekannt, bei der mehrere stillstehende Siebkörbe übereinander angeordnet sind und das Feststoff-Flüssigkeitsgemisch im oberen Bereich des Siebkorbes tangential mit hoher Geschwindigkeit eingebracht wird. Das Gemisch läuft im konischen Siebkorb schraubenförmig nach unten und gibt hierbei die Flüssigkeit an das Spaltsieb ab. Zu Beginn, d. h. gleich nach der Aufgabe des Gemisches ist die Siebleistung verhältnismäßig gering. Auch fließt das Gemisch im unteren Bereich zu schnell durch die zentrale untere Korböffnung ab, ohne in diesem Bereich genügend behandelt zu werden.

Aufgabe der Erfindung ist es, eine Siebvorrichtung der eingangs genannten Art so zu verbessern, daß im Einlaufbereich des Siebkorbes eine optimale Trennwirkung erzielt wird.

Diese Aufgabe wird erfindungsgemäß dadurch gelöst, daß der obere Bereich der Siebkorbwand, in den das Gemisch einläuft, spiralförmig ist, wobei an der Einlaufstelle der größte Radius besteht und der Radius darauffolgender Bereiche stetig abnimmt.

Hierdurch wird eine wesentlich verbesserte Siebleistung zu Beginn, d. h. sofort nach dem Einlaufen des Gemisches in den Siebkorb erreicht. In diesem oberen spiralförmigen Bereich werden schon ca. 90 Prozent der Flüssigkeit abgegeben. Austrag und Nachentwässerung werden dadurch verbessert, wenn der Korb eine Einrichtung aufweist, die ihn schwingen oder vibrieren läßt. Hierbei können die Schwingungen oder Vibrationen durch einen Unwuchtmotor oder Wechselstrommagnete erzeugt werden.

Der Einlaufbereich kann von einem Spaltsieb mit etwa senkrechten Siebspalten gebildet werden, um die Sieb- und Entwässerungsleistung zu verbessern. Denn die Siebvorrichtung dient sowohl zum Sieben, d. h. zum Abschneiden von Feingut, feiner als die Spaltweiten und als auch zum Entwässern, also zum Abschneiden der flüssigen Phase.

Eine sehr präzise Gemischaufgabe als auch ein Bestimmen und Verändern der Aufgabegeschwindigkeit kann dadurch erreicht werden, daß das Gemisch durch eine tangentiale Düse aufgegeben wird, die auswechselbar ist gegen Düsen mit anderem oder verstellbaren Querschnitt. Hierzu können auch mehr als eine Aufgabedüse vorgesehen sein.

Besonders einfach und preiswert herstellbar bei genügender Siebleistung ist der Siebkorb dann, wenn er aus zwei oder mehreren Kegelstumpfmänteln zusammengesetzt ist, deren Steigung von oben nach unten abnimmt.

Ein Ausführungsbeispiel der Erfindung ist in der Zeichnung dargestellt und wird im folgenden näher beschrieben. Es zeigen :

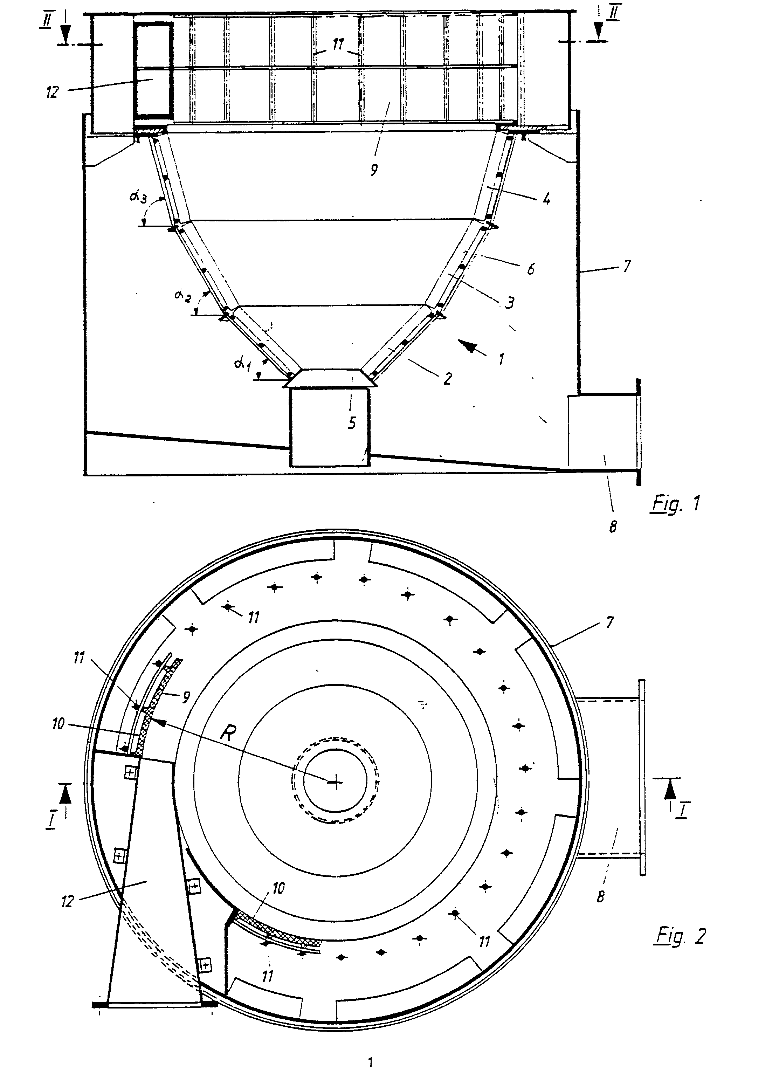

Fig. 1 einen senkrechten Axialschnitt durch die Siebvorrichtung und

Fig. 2 einen Schnitt nach II-II in Fig. 1, wobei der Siebbelag nur am Anfang der Aufgabe und am Ende dargestellt ist.

Der Siebkorb 1 weist drei übereinander angeordnete, aneinander anschließende kegelstumpfförmige Siebmäntel 2, 3, 4 auf, deren unterster Siebmantel 2 die geringste, und deren oberster Siebmantel 4 die größte Steigung besitzt, so daß der Steigungswinkel $\alpha$ dieser Kegelstumpfmäntel beim untersten Siebmantel 2 an kleinsten und beim obersten Siebmantel 4 am größten ist. Der unterste Siebmantel 2 bildet mit seinem unteren Rand eine Auslauföffnung 5 für den Feststoff nach seiner Behandlung. Die Siebmäntel 2, 3, 4, die aus Siebelementen zusammengesetzt sind, werden außen von einer metallenen Wandung 6 gestützt, die Öffnungen zur Abgabe der Flüssigkeit besitzt. Diese Flüssigkeit fließt in das die Vorrichtung umgebende Gehäuse 7, das einen Auslaß 8 am unteren Ende aufweist.

Oberhalb des obersten kegeligen Siebmantels 4 ist ein spiralförmiger Bereich 9 befestigt, der eine spiralförmig gebogene Siebfläche 10 aus Siebelementen aufweist. Diese Siebfläche 10 steht senkrecht. Die Spaltöffnungen dieser Siebfläche werden zweckmäßig senkrecht angeordnet, also quer zur Strömungsrichtung. Die Siebfläche 10 wird rückwärtig von einer Reihe in Spiralform befestigter Stäbe 11 gestützt. Auf die Siebfläche 10 wird das Siebgut bzw. das Feststoff-Flüssigkeitsgemisch durch eine düsenförmige tangentiale Aufgabevorrichtung 12 eingebracht, die an der Stelle der Siebfläche 10, die den größten Radius aufweist, das Gemisch tangential mit hoher Geschwindigkeit waagerecht einbringt. Das Gemisch fließt dann entlang des waagerechten spiralförmigen Bereichs 9 mit senkrechter Siebwandung bis zu der Siebbelagsstelle des Bereichs 9 mit dem kleinsten Radius, um dort dann zum nächstniedrigen Siebmantel 4 zu gelangen.

Der Siebkorbmantel muß nicht unbedingt aus einzelnen Kegelstumpfmänteln zusammengesetzt sein, sondern kann auch ein einziger Rotationskörper mit von oben nach unten stetig abnehmendem Durchmesser und stetig abnehmender Steigung sein. Der Korb kann mit gängigen Siebarten belegt sein, wobei Spaltsiebe vorgezogen werden, deren Spalte im oberen Bereich senkrecht bzw. parallel zur Erzeugenden der Wandung liegen und im unteren Bereich in Umfangsrichtung laufen können, um bei der dort verhältnismäßig niedrigen Geschwindigkeit das Abtropfen der Restflüssigkeit aus dem sich ansammelnden Feststoff zu begünstigen, so daß dann kaum Flüssigkeit zur Austragsöffnung 5 gelangen kann.

Der obere, zylindrische Teil läßt sich mit einem Bogensieb vergleichen. Soll der nachgeschaltete, sich im Durchmesser verjüngende Siebkorb eine optimale Leistung bringen, muß eine gleichmäßige Aufgabe am gesamten Umfang erfolgen. Erfindungsgemäß wird das dadurch gelöst, daß der zylindrische Bereich 9 für etwa 180° bis 340° spiralisch gestaltet wird, ausgehend von der tangential angeordneten Aufgabedüse 12. Der Strom des Aufgabegutes wird durch die spiralische Siebwand stetig nach innen gedrängt und gelangt gleichmäßig auf den oberen Bereich des ersten Siebkegels. Durch die spiralische Siebwand wird dem Aufgabestrom gleichzeitig Flüssigkeit entsprechend dem Schluckvermögen dieses « Bogensiebes » entzogen.

Das « Schluckvermögen » eines Bogensiebes ist u. a. direkt proportional der Aufgabegeschwindigkeit des Aufgabegutes. Bei zylindrischen Bogensieben kann man das bis zu beliebig großen Geschwindigkeiten ausnutzen. Nur der mit größer werdender Geschwindigkeit ansteigende Verschleiß der Siebelemente, des Gehäuses, Leitungen, Pumpen und die Pumpleistungen begrenzen die Geschwindigkeit.

Durch die Reibung auf dem Sieb wird die Geschwindigkeit v immer mehr verringert. Durch die Siebspalten wird ständig Flüssigkeit abgezogen. Was auf dem Siebkorb verbleibt, enthält immer mehr Feststoff; die Viskosität und die Reibung am Sieb steigen an. Bei konstantem Steigungswinkel würde der Flüssigkeitsstrom schnell steil nach unten zum Feststoffaustrag gelangen. Die nach unten abnehmenden Steigungswinkel α wirken dem entgegen, so daß der Großteil der Flüssigkeit durch die Siebspalten abgeschieden wird und nur noch der eingedickte Feststoffbrei zur unteren Austragsöffnung gelangt. Die Restentwässerung wird durch die unten quer verlaufenden Siebspalten noch begünstigt.

In der Regel wird eine Aufgabedüse 9 vorgesehen. Es ist aber auch möglich, mehrere Düsen am Umfang des oberen, zylindrischen Teils anzuordnen. Da sich die Aufgabegeschwindigkeit aus Aufgabemenge und Düsenquerschnitt ergibt, ist es möglich, die Vorrichtung einer einmal festgelegten Größe durch Wahl des Düsenquerschnittes weitgehend jeder Aufgabemenge anzupassen. Zu diesem Zweck sollen die Aufgabedüsen leicht auswechselbar und/oder im Querschnitt verstellbar sein.

Wie beim bekannten Bogensieb ist es möglich, durch Wahl der Spaltweite der Siebe das « Grenzkorn » des Feststoffes zu bestimmen, d. h. die Größe des gröbsten Kornes, das mit der Flüssigkeit ausgetragen wird, und das feinste Korn, das noch im Feststoffanteil verbleibt.

Der Austrag und die Nachentwässerung des Feststoffes kann noch verbessert werden durch hochfrequente, achsiale Schwingungen des ganzen kegligen Korbes oder nur seines unteren Bereichs. Diese Schwingungen können durch Unwuchtmotore oder Wechselstrommagnete erzeugt werden.

## Patentansprüche

1. Siebvorrichtung zum Trennen von Feststoff-Flüssigkeitsgemischen in Feststoff und Flüssigkeit mit einem stillstehenden, vibrierenden oder schwingenden Siebkorb, dessen Innenwand eine Rotationsfläche mit senkrechter Achse ist, dessen Durchmesser sich nach unten hin verjüngt und in dessen obersten Bereich das Gemisch mit hoher Geschwindigkeit tangential eingebracht wird, dadurch gekennzeichnet, daß der obere Bereich (9) der Siebkorbwand, in den das Gemisch einläuft, spiralförmig ist, wobei an der Einlaufstelle der größte Radius (R) besteht und der Radius darauffolgender Bereiche stetig abnimmt.

2. Siebvorrichtung nach Anspruch 1, dadurch gekennzeichnet, daß der Einlaufbereich (9) von einem Spaltsieb mit zur Strömungsrichtung senkrechten Siebspalten gebildet wird.

3. Siebvorrichtung nach Anspruch 1 oder 2, dadurch gekennzeichnet, daß im Einlaufbereich (9) die Siebinnenwand senkrecht steht.

4. Siebvorrichtung nach einem der Ansprüche 1 bis 3, dadurch gekennzeichnet, daß das Gemisch durch eine tangentiale Düse (12) aufgegeben wird.

5. Siebvorrichtung nach Anspruch 4, dadurch gekennzeichnet, daß die Düse auswechselbar ist gegen Düsen mit anderen Querschnitten.

6. Siebvorrichtung nach Anspruch 4 oder 5, dadurch gekennzeichnet, daß mehr als eine Aufgabedüse (12) vorgesehen sind.

7. Siebvorrichtung nach einem der vorherigen Ansprüche, dadurch gekennzeichnet, daß die Steigung (α) der Siebkorbinnenwand von oben nach unten hin abnimmt.

8. Siebvorrichtung nach einem der vorherigen Ansprüche, dadurch gekennzeichnet, daß der Siebkorb (1) aus zwei oder mehreren Kegelstumpfmänteln (2, 3, 4) zusammengesetzt ist, deren Steigung (α) von oben nach unten abnimmt.

9. Siebvorrichtung nach einem der vorherigen Ansprüche, dadurch gekennzeichnet, daß die Schwingungen oder Vibrationen durch einen Unwuchtmotor oder Wechselstrommagnete erzeugt werden.

## Claims

1. Screening device for separating solid-liquid mixtures into solid matter and liquid, having a stationary, vibrating or oscillating screen basket, the inner wall of which is a rotational surface with a perpendicular axis, the diameter of which narrows downwards and into the uppermost area of which the mixture is fed tangentially at high speed, characterized in that the uppermost area (9) of the screen basket wall, into which the mixture runs, is spiral shaped, with the maximum radius (R) being at the inlet location and the radius of subsequent areas constantly decreasing.

2. Screening device according to Claim 1, characterized in that the inlet area (9) is formed by a slotted hole screen having screen gaps which are perpendicular to the direction of flow.

3. Screening device according to Claim 1 or 2, characterized in that the screen inner wall is perpendicular in the inlet area (9).

4. Screening device according to one of Claims 1 to 3, characterized in that the mixture is fed by a tangential nozzle (12).

5. Screening device according to Claim 4, characterized in that the nozzle can be exchanged for nozzles having other cross-sections.

6. Screening device according to Claim 4 or 5, characterized in that more than one feed nozzle (12) is provided.

7. Screening device according to one of the preceding claims, characterized in that the slope (α) of the screen basket inner wall decreases from top to bottom.

8. Screening device according to one of the preceding claims, characterized in that the screen basket (1) is made up of two or more truncated cone jackets (2, 3, 4), the slope (α) of which decreases from top to bottom.

9. Screening device according to one of the preceding claims, characterized in that the vibrations or oscillations are produced by an out-of-balance motor or A. C. magnets.

**Revendications**

1. Dispositif de tamisage pour séparer des mélanges solide-liquide en solide et liquide, avec un panier de tamisage fixe vibrant ou oscillant dont la paroi intérieure est une surface de révolution à axe vertical dont le diamètre diminue vers le bas, et dans la région la plus supérieure duquel le mélange est introduit tangentiellement à grande vitesse, caractérisé par le fait que la région supérieure (9) de la paroi du panier de tamisage dans laquelle entre le mélange est hélicoïdal, le point d'entrée ayant le plus grand rayon (R) et le rayon des régions qui le suivent diminuant progressivement.

2. Dispositif de tamisage selon la revendication 1, caractérisé par le fait que la région d'entrée (9) est formée par un tamis à fentes avec des fentes de tamisage orthogonales à la direction d'écoulement.

3. Dispositif de tamisage selon la revendication 1 ou 2, caractérisé par le fait que la paroi intérieure de tamis est verticale dans la région d'entrée (9).

4. Dispositif de tamisage selon l'une des revendications 1 à 3, caractérisé par le fait que le mélange est chargé par une buse tangentielle (12).

5. Dispositif de tamisage selon la revendication 4, caractérisé par le fait que la buse est interchangeable avec des buses de section différente.

6. Dispositif de tamisage selon la revendication 4 ou 5, caractérisé par le fait qu'on prévoit plus d'une buse de chargement (12).

7. Dispositif de tamisage selon l'une des revendications précédentes, caractérisé par le fait que la conicité (α) de la paroi intérieure du tamis diminue du haut vers le bas.

8. Dispositif de tamisage selon l'une des revendications précédentes, caractérisé par le fait que le panier de tamisage 1 est constitué par l'assemblage de deux ou plusieurs chemises tronconiques (2, 3, 4) dont la conicité (α) diminue du haut vers le bas.

9. Dispositif de tamisage selon l'une des revendications précédentes, caractérisé par le fait que les oscillations ou vibrations sont engendrées par un moteur déséquilibré ou des aimants à courant alternatif.

*Fig. 1*

*Fig. 2*